# EUROPÄISCHE PATENTSCHRIFT

(11) **EP 1 422 413 B1**
(45) Veröffentlichungstag und Bekanntmachung des Hinweises auf die Patenterteilung: **25.06.2008**
(21) Anmeldenummer: 03022026.3
(22) Anmeldetag: 01.10.2003
(51) Int. Cl.: F02M 35/04

(54) **Ansaugsystem**
Air intake system
Système d'admission d'air

(30) Priorität: 20.11.2002 DE 10254134; 03.04.2003 DE 10315346
(43) Veröffentlichungstag der Anmeldung: 26.05.2004
(73) Patentinhaber: Dr. Ing. h.c. F. Porsche Aktiengesellschaft, 71287 Weissach (DE)
(72) Erfinder: Storz, Eberhard, 74366 Kirchheim (DE)

(56) Entgegenhaltungen:
- EP-A- 1 006 275
- DE-A1- 19 507 354
- US-A- 6 089 199
- PATENT ABSTRACTS OF JAPAN Bd. 2000, Nr. 25, 12. April 2001 (2001-04-12) & JP 2001 221113 A (KAWASAKI HEAVY IND LTD), 17. August 2001 (2001-08-17)

## Beschreibung

Die Erfindung bezieht sich auf ein Ansaugsystem für Roh- und Reinluft durch einen Luftfilter einer Brennkraftmaschine eines Kraftfahrzeugs nach dem Oberbegriff des Patentanspruchs 1.

Aus der DE 199 40 610 A1 sowie aus der JP-2001-221113 ist ein Luftfilter für eine Brennkraftmaschine bekannt, der ein Luftfiltergehäuse mit einem Filtereinsatz umfaßt, welcher einen ersten Gehäuseraum mit einem Einlaß für Rohluft und einem anschließenden zweiten Gehäuseraum mit einem Auslaß für Reinluft umfaßt, der mit einer Luftleitung verbunden ist.

Die Aufgabe der Erfindung besteht darin, ein Luftfiltergehäuse zu schaffen, das wahlweise zur Verwendung für unterschiedliche Motoren und Motorraumkonzeptionen geeignet ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch die Ausbildung des Luftfiltergehäuses mit zwei Auslässen für Reinluft unterschiedliche Motoren, wie Sechs- bzw. Achtzylinder-V-Motoren oder Acht- bzw.
Zwölfzylinder-W-Motoren ein gleiches Luftfiltergehäuse verwendet werden kann. Hierzu ist nach der Erfindung vorgesehen, daß das Luftfiltergehäuse für die Reinluft einen Gehäuseabschnitt mit gegenüberstehenden Auslässen für die Reinluft aufweist und jeder Auslaß für die Reinluft in Abhängigkeit vom verwendeten Motor abschließbar ist und der nicht abgeschlossene Auslaß mit einer Luftleitung verbindbar ist.

Die Ausbildung der Motoren bzw. die Konzeption des Motorraumes bedingt, daß die Luftauslässe für die Reinluft entweder - in Fahrtrichtung gesehen - in Fahrtrichtung oder entgegen der Fahrtrichtung geöffnet sind. Hierzu ist nach der Erfindung desweiteren vorgesehen, daß in einer ersten Version ein Reinluftauslaß - in Bezug auf die Fahrtrichtung F des Fahrzeugs - in Fahrtrichtung geöffnet und jeweils mit einer Luftleitung 12, 13, die eine entgegen der Fahrtrichtung F geöffnete Luftaustrittsöffnung aufweist, verbunden ist, wobei der weitere Reinluftauslaß im Gehäuseabschnitt dicht abgeschlossen ist.

In einer weiteren Version ist vorgesehen, daß der Reinluftauslaß - in Bezug auf die Fahrtrichtung des Fahrzeugs - entgegen der Fahrtrichtung geöffnet und mit jeweils einer Luftleitung die eine in Fahrtrichtung geöffnete Luftaustrittsöffnung aufweist, verbunden ist, wobei der weitere Reinluftauslaß im Gehäuseabschnitt dicht abgeschlossen ist.

Durch diese Ausbildung des Luftgehäuses mit zwei Luftauslässen ist in einfacher Weise eine Anpassung an verschiedene Motoren möglich, wobei der Reinluftauslaß über einen Deckel oder eine in den Auslaß des Gehäuses eingeformte Wandung verschließbar ist.

Das Verschließen der nicht verwendeten Auslaßöffnung im Gehäuseabschnitt kann über die angeformte Wand erfolgen, welche bei der Herstellung des Luftfiltergehäuses mit angespritzt bzw. erzeugt wird, so daß diese Wand einstückig mit dem Gehäuse ist. Wenn eine solche Wand nicht vorhanden ist, wird ein aufklipsbarer oder am Gehäuseabschnitt festsetzbarer Deckel verwendet, der einen dichten Abschluß gewährleistet.

Zur Verbindung einer Reinluftleitung mit dem Luftfiltergehäuse ist ein Anschlußstutzen vorgesehen, der einen umlaufenden Flansch aufweist, welcher mit einem Kragen des Gehäuseabschnitts fest und dicht verbindbar ist.

Ein Ausführungsbeispiel der Erfindung ist in den Zeichnungen dargestellt und wird im folgenden näher beschrieben.
Es zeigen
- Fig.: eine schaubildliche Darstellung eines Luftfilters mit einem Lufteinlaß für Rohluft und Luftauslässe für Reinluft,
- Fig. 2: einen in das Luftfiltergehäuse eingesetzten Anschlußstutzen für eine Reinluftleitung im Schnitt,
- Fig. 3: eine schaubildliche Darstellung mit zwei Luftfiltergehäusen und Luftauslässen für Reinluft, die entgegen der Fahrtrichtung geöffnet sind,
- Fig. 4: eine schaubildliche Darstellung mit zwei Luftfiltergehäusen und Luftauslässen für Reinluft, die in Fahrtrichtung geöffnet sind und

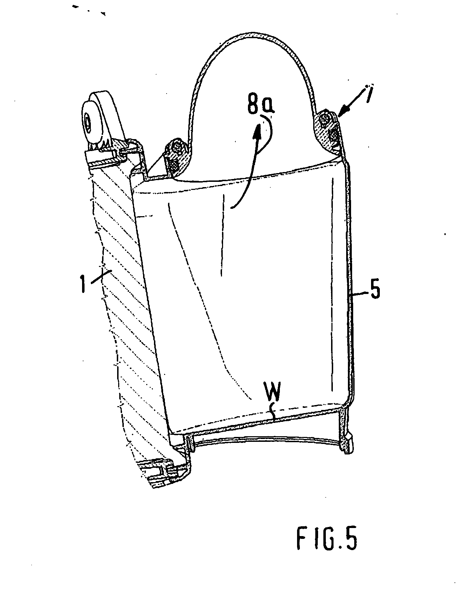

- Fig. 5: einen Schnitt nach der Linie V-V der Fig. 3, der den abschließenden Deckel am Auslaß des Gehäuseabschnitts aufweist.

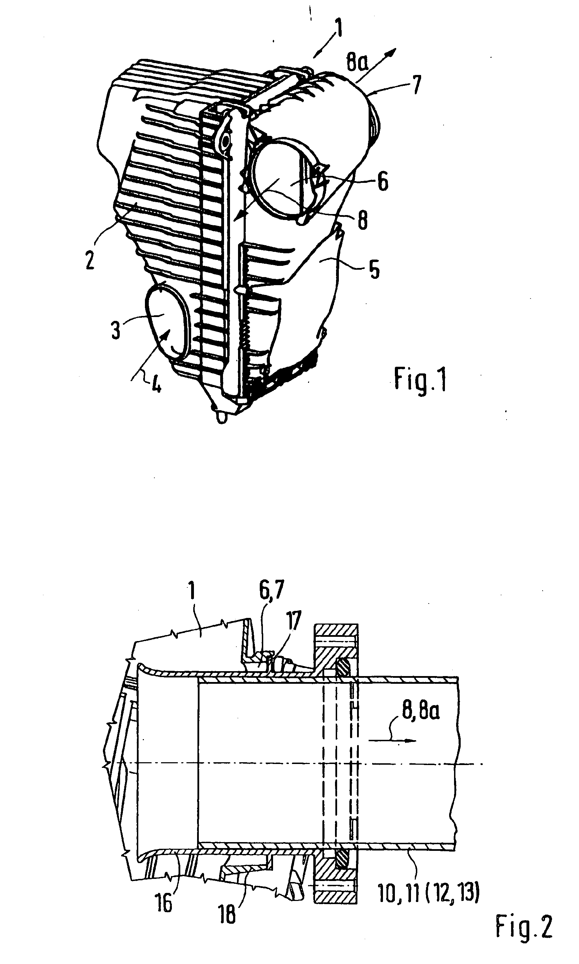

Ein Luftfiltergehäuse 1, 1a gem. Fig. 1 für eine Brennkraftmaschine umfaßt einen ersten Gehäuseabschnitt 2 mit einem Einlaß 3, 3a für Rohluft 4 und einen über ein Filterelement (nicht gezeigt) abgetrennten anschließenden zweiten Gehäuseabschnitt 5 mit Auslässen 6, 7 für Reinluft 8, 8a.

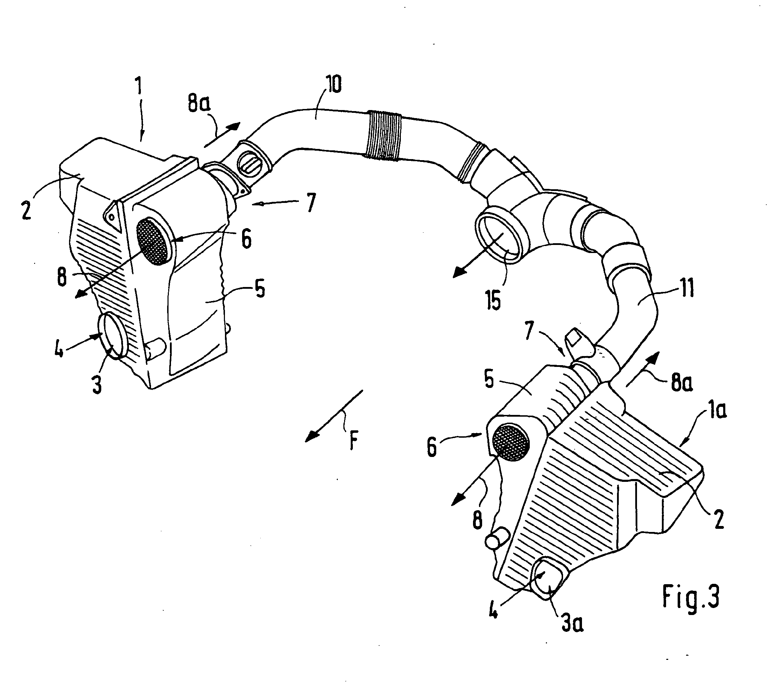

Wie in Fig. 3 in einer ersten Variante näher dargestellt ist, sind zu beiden Seiten des Motors ein Luftfiltergehäuse 1, 1a angeordnet. Über den Lufteinlaß 3, 3a wird Rohluft 4 vom ersten Raum 2 im Gehäuseabschnitt 2 aufgenommen und über das Filterelement in den anschließenden zweiten Raum 5 des weiteren Gehäuseabschnittes 5 geleitet. Von hier aus wird die Reinluft 8a zum Auslaß 7 geleitet, an dem sich Luftleitungen 10, 11 mit einer gemeinsamen und in Fahrtrichtung F geöffneten Luftaustrittsöffnung 15 anschließen. Die Auslässe 7 im Gehäuse 5 sind entgegen der Fahrtrichtung F geöffnet, wobei die weiteren Auslässe 6 dann dicht abgeschlossen sind.

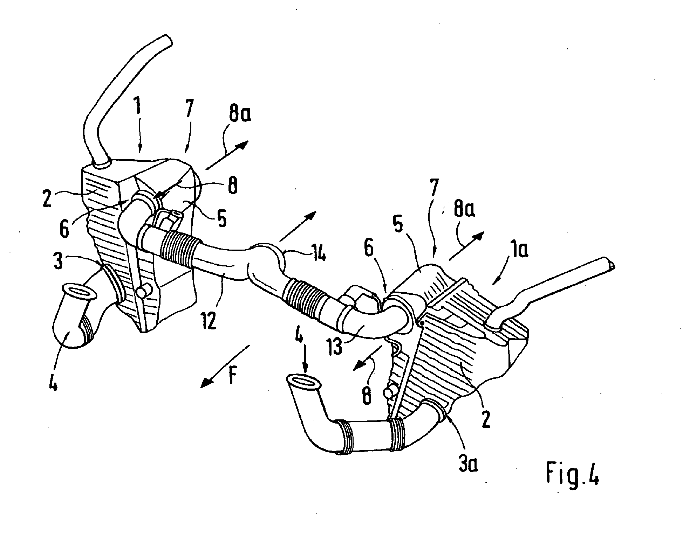

In Fig. 4 ist eine weitere Variante der Luftführungsgehäuse 1, 1a dargestellt, bei der die Auslässe 6 für die Reinluft 8 in Fahrtrichtung F geöffnet sind; dagegen die Auslässe 7 entgegen der Fahrtrichtung F über eine ausgeformte Wandung W oder einen Deckel dicht abgeschlossen sind. An die Auslässe 6 schließen sich Verbindungsleitungen 12, 13 an, die eine gemeinsame Luftaustrittsöffnung 14 aufweisen, welche entgegen der Fahrtrichtung F geöffnet ist.

In Fig. 2 ist in vergrößerter Darstellung ein Auslaß 6, 7 für die Reinluft im Raum des Gehäuseabschnitts 5 des Luftfiltergehäuses 1, 1a gezeigt. In diesem Auslaß 6, 7 ist ein Anschlußstutzen 16 eingesetzt, der einen umlaufenden Flansch 17 aufweist, welcher im Einbauzustand an einem Kragen 18 des Gehäuseabschnitts 5 anliegt und mit diesem fest verbunden ist. In dem Anschlußstutzen 16 ist die Verbindungsleitung 10, 11 bzw. 12, 13 einsetzbar.

## Patentansprüche

1. Ansaugsystem für Roh- und Reinluft durch eine Luftfilter einer Brennkraftmaschine eines Kraftfahrzeugs, wobei der Luftfilter ein Luftfiltergehäuse umfaßt, das mittels eines Filtereinsatzes in zwei Gehäuseräume unterteilt ist, wobei der eine Gehäuseraum einen Einlaß für Rohluft und der anschließende Gehäuseraum einen Auslaß für Reinluft aufweist, **dadurch gekennzeichnet, daß** das Luftfiltergehäuse (1, 1a) für die Reinluft (8, 8a) einen Gehäuseabschnitt (5) mit gegenüberstehenden Auslässen (6, 7) für diese Reinluft aufweist und jeder Auslaß (6) oder (7) für die Reinluft in Abhängigkeit vom verwendeten Motor abschließbar ist und der nicht abgeschlossene Auslaß (6) oder (7) mit einer Luftleitung (10, 11) bzw. (12, 13) verbindbar ist.

2. Ansaugsystem nach Anspruch 1, **dadurch gekennzeichnet, daß** der Reinluftauslaß (6) - in Bezug auf die Fahrtrichtung (F) des Fahrzeugs - in/Fahrtrichtung (F) geöffnet und jeweils mit einer Luftleitung (12, 13) die eine entgegen der Fahrtrichtung (F) geöffnete Luftaustrittsöffnung (14) aufweist, verbunden ist, wobei der weitere Reinluftauslaß (7) im Gehäuseabschnitt (5) dicht abgeschlossen ist.

3. Ansaugsystem nach Anspruch 1, **dadurch gekennzeichnet, daß** der Reinluftauslaß (7) - in Bezug auf die Fahrtrichtung (F) des Fahrzeugs - entgegen der Fahrtrichtung (F) geöffnet und mit jeweils einer Luftleitung (10, 11), die eine in Fahrtrichtung (F) geöffnete Luftaustrittsöffnung (15) aufweist, verbunden ist, wobei der weitere Reinluftauslaß (6) im Gehäuseabschnitt (5) dicht abgeschlossen ist.

4. Ansaugsystem nach den Ansprüchen 1, 2 oder 3, **dadurch gekennzeichnet, daß** der Reinluftauslaß (6) oder (7) über einen Deckel oder eine in den Auslaß (6) oder (7) des Gehäuses (1, 1a) eingeformte Wandung (W) verschließbar ist.

5. Ansaugsystem nach einem der vorhergehenden Ansprüche, **dadurch gekennzeichnet, daß** der Reinluftauslaß (6, 7) mit einem Anschlußstutzen (16) für die Luftleitungen (10, 11) bzw. (12, 13) verbunden ist, der einen umlaufenden Flansch (17) umfaßt, welcher mit einem Kragen (18) des Gehäuseabschnitts (5) verbindbar ist.

## Claims

1. Air intake system for raw air and clean air through an air filter of an internal combustion engine of a motor vehicle, wherein the air filter comprises an air filter housing which is divided into two housing spaces by means of a filter insert, wherein one of the housing spaces has an inlet for raw air and the adjoining housing space has an outlet for clean air, **characterized in that** the air filter housing (1, 1a) for the clean air (8, 8a) has a housing section (5) with outlets (6, 7), located opposite one another, for this clean air, and each outlet (6) or (7) for the clean air can be closed off as a function of the engine used and the outlet (6) or (7) which is not closed off can be connected to an air line (10, 11) and (12, 13), respectively.

2. Air intake system according to Claim 1, **characterized in that** the clean air outlet (6) is opened, with respect to the travel direction (F) of the vehicle, in the travel direction (F) and is connected in each case to an air line (12, 13) which has an air outlet opening (14) which is opened in the opposite direction to the travel direction (F), wherein the further clean air outlet (7) in the housing section (5) is closed off in a sealed fashion.

3. Air intake system according to Claim 1, **characterized in that** the clean air outlet (7) is opened, with respect to the travel direction (F) of the vehicle, in the opposite direction to the travel direction (F) and is connected in each case to an air line (10, 11) which has an air outlet opening (15) which is opened in the travel direction (F), wherein the further clean air outlet (6) in the housing section (5) is closed off in a sealed fashion.

4. Air intake system according to Claims 1, 2 or 3, **characterized in that** the clean air outlet (6) or (7) can be closed by means of a lid or a wall (W) which is integrally formed into the outlet (6) or (7) of the housing (1, 1a).

5. Air intake system according to one of the preceding claims, **characterized in that** the clean air outlet (6, 7) is connected to a connector (16) for the air lines (10, 11) and (12, 13), respectively, which connector (16) comprises a circumferential flange (17) which can be connected to a collar (18) of the housing section (5).

## Revendications

1. Système d'admission d'air pour de l'air brut et de l'air pur, à travers un filtre à air d'un moteur à combustion interne d'un véhicule automobile, le filtre à air comprenant un boîtier de filtre qui est divisé au moyen d'un insert de filtre en deux chambres de boîtier, l'une des chambres de boîtier présentant une entrée pour l'air brut et la chambre de boîtier adjacente présentant une sortie pour l'air pur, **caractérisé en ce que** le boîtier du filtre à air (1, 1a) pour l'air pur (8, 8a) présente une portion de boîtier (5) avec des sorties opposées (6, 7) pour cet air pur, et chaque sortie (6) ou (7) pour l'air pur peut être fermée en fonction du moteur utilisé et la sortie (6) ou (7) non fermée peut être connectée à une conduite d'air (10, 11) ou (12, 13).

2. Système d'admission d'air selon la revendication 1, **caractérisé en ce que** la sortie d'air pur (6) - par rapport à la direction d'avance (F) du véhicule - est ouverte dans la direction d'avance (F) et est connectée à chaque fois à une conduite d'air (12, 13) qui présente une ouverture de sortie d'air (14) ouverte dans la direction contraire à la direction d'avance (F), la sortie d'air pur supplémentaire (7) dans la portion de boîtier (5) étant fermée hermétiquement.

3. Système d'admission selon la revendication 1, **caractérisé en ce que** la sortie d'air pur (7) - par rapport à la direction d'avance (F) du véhicule - est ouverte dans la direction contraire à la direction d'avance (F), et est connectée à chaque fois à une conduite d'air (10, 11) qui présente une ouverture de sortie d'air (15) ouverte dans la direction d'avance (F), la sortie d'air pur supplémentaire (6) dans la portion de boîtier (5) étant fermée hermétiquement.

4. Système d'admission selon l'une quelconque des revendications 1, 2 ou 3, **caractérisé en ce que** la sortie d'air pur (6) ou (7) peut être fermée par un couvercle ou par une paroi (W) façonnée dans la sortie (6) ou (7) du boîtier (1, 1a).

5. Système d'admission selon l'une quelconque des revendications précédentes, **caractérisé en ce que** la sortie d'air pur (6, 7) est connectée à un ajutage (16) pour les conduites d'air (10, 11) ou (12, 13), qui comprend une bride périphérique (17) qui peut être connectée à un rebord (18) de la portion de boîtier (5).
